# EUROPÄISCHE PATENTSCHRIFT

(11) **EP 2 353 707 B1**
(45) Veröffentlichungstag und Bekanntmachung des Hinweises auf die Patenterteilung: **28.08.2013**
(21) Anmeldenummer: 10151872.8
(22) Anmeldetag: 28.01.2010
(51) Int. Cl.: B01F 7/00, B01F 7/08, B01F 15/00, A23G 1/00, A23G 1/10, B01F 15/06

(54) **Vorrichtung und Verfahren zum Mischen und Kneten von Massen, insbesondere Schokoladenmassen**
Apparatus and method for mixing and kneading of masses, particularly of chocolate masses
Dispositif et procédé pour la malaxage et le pétrissage de pâtes, particulièrement de pâtes de chocolat

(43) Veröffentlichungstag der Anmeldung: 10.08.2011
(73) Patentinhaber: Bühler AG, 9240 Uzwil (CH)
(72) Erfinder: Bräker, Willy, 9500 Wil (CH); Dolic, Danijel, 9244 Niederuzwil (CH); Hartsieker, Martin, 32549 Bad Oeynhausen (DE); Braun, Peter, 8280 Kreuzlingen (CH); Schmidt, Bernd, 9533 Kirchberg (CH); König, Rene, 8580 Amriswil (CH)
(74) Vertreter: Hepp Wenger Ryffel AG

(56) Entgegenhaltungen:
- EP-A1- 0 632 961
- EP-A1- 0 931 454
- EP-A2- 0 518 025
- DE-A1- 1 937 268
- DE-A1- 19 637 098
- US-A- 4 606 647
- US-A- 5 083 506

## Beschreibung

Die Erfindung betrifft eine Vorrichtung zum Mischen und Kneten von Massen, insbesondere von Schokoladenmassen, sowie ein Verfahren zum Mischen und Kneten von Massen, insbesondere Schokoladenmassen.

Bei der Herstellung und Bearbeitung insbesondere von Fettmassen wie Schokolade werden die Komponenten der Masse zunächst miteinander gemischt und die Grundmasse wird beim Mischen und gegebenenfalls beim Kneten homogen und plastisch. Bei den Komponenten der Masse handelt es sich um feste und/oder flüssige Bestandteile, also Trockenbestandteile, wie Kakaopulver, körniger Kristallzucker oder Milchpulver, Flüssigkeiten und/oder pastöse Massen.

Aus den Druckschriften DE1782585 A1, EP 565887 A1 und DE19637098 A1 sind beispielsweise Vorrichtungen zum Mischen bekannt, die einen Kessel mit einer angetriebenen Welle aufweisen, wobei an der Welle Werkzeuge, insbesondere Misch-, Homogenisierungs-, Scher-, Schabe- und/oder Förderwerkzeuge angeordnet sind.

Die Druckschriften US 5,083, 506 A1 und EP 0 632 961 A1 offenbaren Vorrichtungen zum Mischen und Kneten mit einem horizontal angeordneten Kessel mit teilzylindrischer Innenwand und zwei parallel zueinander angeordneten Wellen, an denen Werkzeuge befestigt sind. Die Kessel besitzen Öffnungen, die halsartige Flächen aufweisen. Die Öffnungen erstrecken sich in axialer Richtung entlang des Kessels.

Die Druckschrift DE 1 937 268 A1 zeigt eine Vorrichtung zur Herstellung von Schokolade mit einem Wellenpaar. Jede Welle trägt eine Mehrzahl von Schaufeln, die sich schneckenförmig in einer Richtung erstrecken und eine Mehrzahl von Schaufeln, die sich schneckenförmig in eine andere Richtung erstrecken.

Die Druckschrift EP0931 454 A1 zeigt eine Vorrichtung zum Zerkleinern und Mischen von Tierfutter, wobei die zu bearbeitende Masse in einem teilzylindrischen Behälter von zwei gegenläufigen Förderschnecken bewegt wird. In dem Behälter ist ein Zufuhrplatte angeordnet, von welcher die Futtermittelkomponenten in den Behälter abgleiten können.

Vorrichtungen zum Mischen weisen in der Regel einen Kessel mit einer Innenwand auf, die wenigstens teilweise die Aussenfläche eines Rotationskörpers nachbildet. Dabei handelt es sich insbesondere um einen Zylindermantel. Die Innenwand kann aber auch einem konischen Körper, wie einen Kegel, entsprechen. Die rotierenden Werkzeuge können dann an einem Grossteil der Innenwand des Kessels entlang streifen. Das Mischen und Kneten wird in der Regel in einem Doppelzylindertrog mit zwei achsparallel rotierenden Wellen durchgeführt.

Bevorzugt sind der Kessel, bzw. die Achse des Rotationskörpers, und die Welle horizontal anzuordnen. Der Kessel kann allerdings auch geneigt oder sogar vertikal angeordnet sein, sodass die Masse, von der Schwerkraft unterstützt, entlang der Kesselachse getrieben wird. Mischer mit im Wesentlichen horizontal angeordneten Wellen werden im Folgenden Horizontalmischer genannt.

In der Regel weisen die Kessel zum Einfüllen der Masse im oberen Bereich eine Einfüllöffnung auf, während am tiefsten Punkt des Kessels ein Auslauf angeordnet ist.

In dem Mischer wird die Masse von den Werkzeugen um die Welle herum getrieben. In einem Horizontalmischer wird die Masse von den Werkzeugen in aufsteigender Richtung angehoben, löst sich oben angekommen vom Werkzeug und fällt aufgrund der Schwerkraft durch den Zwischenraum zwischen Werkzeug und Welle auf den unteren Teil der Innenwand des Kessels, von wo sie wiederum von den Werkzeugen aufgenommen wird. Die Komponenten der Masse vermischen sich dabei und die Masse wird homogenisiert.

Ausgehend von dem Bekannten liegt der Erfindung die Aufgabe zugrunde, eine Vorrichtung und ein Verfahren bereitzustellen, mit welchem die Misch- und/oder Knetvorgänge effektiver gestaltet werden und die verarbeitete Masse besser und schneller für nachfolgende Prozesse bereitgestellt werden kann.

Die Aufgabe wird gelöst durch eine Vorrichtung gemäß Anspruch 1 zum Mischen und Kneten von Massen, insbesondere von Schokoladenmassen. Diese umfasst einen bei bestimmungsgemässem Gebrauch bevorzugt horizontal anzuordnenden Kessel mit einer Innenwand, die wenigstens teilweise, insbesondere zu 50-90% ihrer Fläche, bevorzugt zu 60-90% ihrer Räche, weiter insbesondere zu 60-85%, weiter insbesondere zu 70-80%, die Aussenfläche eines Rotationskörpers nachbildet, insbesondere einen Zylindermantel.

Die Vorrichtung umfasst ausserdem eine im Kessel angeordnete Welle mit mindestens einem daran befestigten Werkzeug. Zum Mischen und Kneten wird bevorzugt ein Scherwerkzeug verwendet. Dieses hat im Gegensatz zu einem, beispielsweise in einer Conche verwendeten, Schabwerkzeug einen grösseren Abstand zur Kesselwand und ermöglicht somit ein Scheren der Masse zwischen Werkzeug und Wand.

Erfindungsgemäss ist in dem Kessel mindestens eine, insbesondere ebene, Prallfläche angeordnet, die sich in axialer Richtung des Rotationskörpers erstreckt und die sich insbesondere ausserhalb und/oder innerhalb der Aussenfläche des Rotationskörpers befindet. Das heisst, die Prallfläche ist nicht Teil der Aussenfläche des Rotationskörpers, insbesondere nicht Teil der Innenwand des Kessels, der die Kontur eines Rotationskörpers besitzt.

In einer solchen Vorrichtung können nicht nur Komponenten einer Masse bewegt und dadurch vermischt werden. An der erfindungsgemässen Prallfläche kann die gesamte Masse oder Teile davon eine Stauchung erfahren, die über das Auftreffen der Masse beim Herunterfallen auf den unteren Teil der Innenwand des Kessels hinausgeht. Die Masse kann so einem Knetvorgang unterzogen werden.

Ist die Prallfläche innerhalb der Rotationskörpers angeordnet, muss der Weg der umlaufenden Werkzeuge um die Prallfläche herumführen, die Werkzeuge können dafür beispielsweise von einer exzentrisch angebrachten Achse angetrieben werden und/oder federnd gelagert sein.

In einer bevorzugten Ausführung der Erfindung ist die Welle koaxial mit der Achse des Rotationskörpers angeordnet. Bei der Verwendung von starren Werkzeugen bedeutet dies, dass die Prallfläche ausserhalb des Rotationskörpers angeordnet ist.

Um den Kneteffekt zu begünstigen, bietet der Kessel vorteilhafterweise Raum für einen freie Flugbahn, insbesondere Parabelbahn, von durch das Werkzeug beschleunigter Masse, insbesondere von tangential von der Innenwand aus beschleunigter Masse. Die Prallfläche kann dann so angebracht sein, dass Masse durch den Raum für die freie Flugbahn auf die Fläche geschleudert wird. Bevorzugt weitet sich der Innenraum des Kessels über den Rotationskörper hinaus, sodass eine Ablösekante entsteht, von der aus die Masse tangential zur Schnittfläche des Rotationskörpers beschleunigt wird.

Bei im Wesentlichen horizontal angeordneten Mischern befindet sich der Raum für die Flugbahn in der oberen Hälfte, so dass die beschleunigte Masse in etwa eine Parabelbahn durchläuft. Bei geeigneter Startgeschwindigkeit kann die Masse danach auf die Prallfläche treffen.

Der Raum kann dadurch gegeben sein, dass der Kessel eine im Wesentlichen parallel zur Achse angeordnete halsartige Öffnung mit mindestens einer Schulterfläche aufweist. Die Öffnung kann ausserdem zum Befüllen und/oder Belüften und/oder Reinigen des Kessels und/oder zum Austausch der Werkzeuge genutzt werden.

Die Aufgabe wird weiterhin gelöst durch eine Vorrichtung wie oben beschrieben, bestehend aus einem bei bestimmungsgemässem Gebrauch bevorzugt horizontal anzuordnenden Kessel mit einer wenigstens teilweise zylindrischen Innenwand, mit einer Welle und mindestens einem daran befestigten Werkzeug, insbesondere einem Abstreifwerkzeug, wobei der Kessel erfindungsgemäss eine parallel zur Achse des Rotationskörpers angeordnete halsartige Öffnung mit mindestens einer Schulterfläche aufweist, die sich im Wesentlichen über die gesamte Länge des Kessels erstreckt.

Eine bei einem Horizontalmischer in der oberen Hälfe des Kessels angeordnete Öffnung kann einerseits zum Befüllen und/oder Belüften und/oder Reinigen des Kessels und/oder zum Austausch der Werkzeuge genutzt werden. Sie kann auch Raum geben für die Flugbahn von im Mischer beschleunigter Masse.

Bevorzugt bildet mindestens eine Schulterfläche der Öffnung eine Prallfläche. Die halsartige Öffnung kann auch so ausgebildet sein, dass sie zwei Schulterflächen aufweist, die jeweils Prallflächen bilden, sodass die Masse in beiden Drehrichtungen der Werkzeuge gegen die Prallfläche geschleudert werden kann.

Der Öffnungswinkel der axial verlaufenen Öffnung ist so gewählt, dass für ein breites Spektrum der zu mischenden Massen die Massen einerseits nicht aus dem Mischer herausspritzen, andererseits die Prallfläche erreichen.

Es kann eine Abdeckung, beispielsweise ein Klappdeckel, für die Öffnung vorgesehen sein.

In einer vorteilhaften Ausführung der Erfindung ist das Werkzeug als Schneckenband ausgeführt. Dieses versetzt die Masse einerseits in eine Rotation und schleudert sie gegen die Prallfläche, andererseits wird die Masse in Axialrichtung durch den Mischer getrieben. Die Förderrichtung kann bei einer Umkehrung der Drehrichtung umgekehrt werden, sodass die Masse bei einem Wechsel der Drehrichtungen in Axialrichtung hin und her bewegt werden kann.

In einer weiteren vorteilhaften Ausführung der Erfindung weist die Vorrichtung eine Geschwindigkeitssteuerung und/oder einen Geschwindigkeitsregler für die Drehgeschwindigkeit der Welle und der Werkzeuge auf. Diese dient insbesondere zur Anspassung der Flug- oder Parabelbahn an die Eigenschaften der Masse, die beispielsweise durch Zusammensetzung, die Menge, das spezifische Gewicht, die Konsistenz usw. gegeben ist.

Mit einer Einstellung der Geschwindigkeit kann bei gegebener Anordnung der Prallfläche dafür gesorgt werden, dass die Masse zum Beispiel einerseits nicht aus dem Kessel herausfliegt und andererseits ein Grossteil der Masse auf die Prallfläche trifft. Dazu muss die Tangentialgeschwindigkeit, die von der Umdrehungszahl der Welle und den Eigenschaften der Masse abhängt, beim Ablösen von der Innenwand der Masse in einem geeigneten Wertebereich liegen. Die notwendige Geschwindigkeit, bzw. Umdrehungszahl, kann leicht durch Routineversuche ermittelt werden.

Alternativ kann auch die Prallfläche veränderbar vorgesehen sein, beispielsweise kann die Position der Prallfläche verschiebbar und/oder die Höhe und/oder die Flächengrösse veränderbar sein und/oder die gesamte Prallfläche kann austauschbar sein, je nachdem, welche Auftrittsfläche in Abhängigkeit von der eingefüllten Masse und den einstellbaren Drehgeschwindigkeiten gewünscht ist. Alternativ kann die Flugbahn der Masse auch mit einem zusätzlichen Bauteil, zum Beispiel einem eingeschobenen Keil, begrenzt werden.

Die der Erfindung zugrunde liegende Aufgabe wird ausserdem gelöst durch eine Vorrichtung zum Mischen und Kneten von Fettmassen, insbesondere von Schokoladenmassen, wie oben beschrieben, bestehend aus einem bei bestimmungsgemässem Gebrauch bevorzugt horizontal anzuordnenden Kessel mit einer wenigstens teilweise zylindrischer Innenwand, der eine Welle und mindestens ein daran befestigten Werkzeug aufweist. Dabei handelt es sich insbesondere einem Scherwerkzeug. Erfindungsgemäss ist vorgesehen, dass an der Welle zwei gegenläufige Schneckenbänder oder Teile von gegenläufigen Schneckenbändern angebracht sind, die bevorzugt, zumindest teilweise, überlappen. Der Bänder überlappen bevorzugt in Nähe des Auslasses des Kessels, der sich in der Mitte des Kessels befinden kann.

Die Schneckenbänder oder Schneckenbandstücke sind insbesondere so ausgeführt, dass sie gleichzeitig als Scherwerkzeug wirken.

Der Wellenantrieb kann dann nur in einer Richtung erfolgen und die Masse wird durch rechts- und linkgängige Schneckenbänder in entgegen gesetzten Richtungen getrieben.

Die Schneckenbänder einer Drehrichtung können zusammenhängend ausgeführt sein, oder als Einzelstücke vorliegen. Die Einzelstücke sind jeweils Teile von Schneckenbändern. Sie können voneinander beabstandet sein. Die gedachte Verbindungslinie der Einzelstücke kann die Form eines durchgehenden Schneckenbandes haben.

Die in der Nähe des Auslasses, zum Beispiel in der Mitte des Kessels, überlappenden gegenläufigen Scheckenbänder sind bevorzugt so angeordnet, dass die Masse zu dem überlappenden Bereich hin getrieben wird. Dort befindet sich bevorzugt der Auslauf des Kessels, sodass für eine saubere Entleerung gesorgt werden kann. Zusätzlich kann auf der Welle mindestens ein Rührpaddel angeordnet sein, welches den Mischeffekt verstärkt.

Das Rührpaddel kann kürzer als das Werkzeug sein, da das Mischen gerade bei kleineren Drehgeschwindigkeiten eine Rolle spielt, bei denen der Einfluss der Zentrifugalkraft im Vergleich zur Schwerkraft geringer ist und sich die Masse vorwiegend in der unteren Hälfte des Kessels befindet.

Die Vorrichtung weist eine Temperiereinrichtung auf. Mit dieser können der Kessels und/oder die Innenwand und/oder die eingefüllte Masse gewärmt und/oder gekühlt werden. Dies ist besonders günstig bei der Verarbeitung von Schokoladenmasse, die anfangs erwärmt wird, um die Masse geschmeidig zu machen, die in einer späteren Phase, nachdem mechanische Energie in die Masse eingebracht wurde, gegebenenfalls noch gekühlt werden kann.

Schokoladenmasse wird vorteilhafterweise bei einer Temperatur zwischen 35°C und 50°C Grad bearbeitet.

Die der Erfindung zugrunde liegende Aufgabe wird ausserdem gelöst durch ein Verfahren gemäß Anspruch 12 zum Mischen und Kneten von Massen, insbesondere Schokoladenmassen, wobei die Masse in einem Mischer wie oben beschrieben, von einem Werkzeug, insbesondere einem Abstreifwerkzeug, gegen eine Prallfläche geschleudert wird.

Durch den Schleudervorgang und das Stauchen beim Aufprall auf die Prallfläche wird die Masse einem Knetvorgang unterzogen. Dieser geht über die Benarbeitung der Masse mit Werkzeugen, bei der z.B. Scherkräfte auf die Masse wirken, oder das Herunterfallen der Masse aufgrund der Schwerkraft hinaus, da die Geschwindigkeitskomponente in der Schleuderrichtung, insbesondere die Tangentialgeschwindigkeit, mit ausgenutzt wird.

In einem Horizontalmischer erfährt die Masse bei einem Umlauf der Welle zwei Stauchungen, zum einen beim Aufprall auf die Prallfläche, zum einen beim Herunterfallen auf die Unterseite des Kessels. Die Masse wird also sehr effektiv geknetet. Denn pro Umlauf findet mehr als eine Stauchung statt und weil diese Stauchungen in verschiedenen Richtungen stattfinden, kann es überdies zu einer Faltung der teigigen Masse kommen, was den Knetprozess weiter begünstigt.

In einer vorteilhaften Ausführung des Verfahrens wird die Masse in einem Mischer mit einem wenigstens eine teilweise zylindrische Innenwand aufweisenden Kessel, insbesondere einem Horizontalmischer, tangential zu der zylindrischen Innenwand beschleunigt. Die Masse durchläuft dann die Flugbahn eines schrägen Wurfs, bevor sie auf die Prallfläche auftrifft.

Bei dieser Anordnung kann die Drehgeschwindigkeit optimal an die Verhältnisse in dem Kessel, insbesondere die Eigenschaften der Masse, angepasst werden, sodass ein Grossteil der Masse mit hoher Geschwindigkeit auf die Prallfläche trifft und dort eine Stauchung erfährt.

In einer vorzugsweisen Ausführung der Erfindung wird die Geschwindigkeit des mindestens einen Werkzeuges gesteuert oder geregelt, insbesondere zur Anspassung der Flug- oder Parabelbahn an die Eigenschaften der Masse, wie Zusammensetzung, Menge, spezifisches Gewicht, Konsistenz, Temperatur usw..

Bevorzugt wird je nach Rezeptur der Masse die geeignete Drehzahl empirisch bestimmt.

Bevorzugt wird die Masse in einem Horizontalmischer zunächst bei einer ersten Geschwindigkeit bewegt, wobei die Komponenten der Masse vorwiegend gemischt werden. Die Masse wird anschliessend bei einer zweiten Geschwindigkeit bewegt, wobei die Masse gegen die Prallfläche geschleudert und vorwiegend geknetet wird.

Die Geschwindigkeiten sind so produktabhängig vorzugsweise so einzustellen, dass der theoretische Aufschlagpunkt in der Mitte der Prallfläche liegt.

Der Prozess, bzw. die Qualität des Mischgutes kann mittels einer Drehmomentaufnahme und/oder einer Leistungsaufnahme geregelt werden.

Zusätzlich wird die Masse während der Bearbeitung temperiert..

Die Erfindung ist im Folgenden in Ausführungsbeispielen anhand von Zeichnungen näher erläutert.

Es zeigen
- Figur 1: eine schematische Schnittdarstellung einer erfindungsgemässen Vorrichtung;
- Figur 2: eine Draufsicht auf eine erfindungsgemässen Vorrichtung;
- Figur 3: eine Draufsicht auf eine Welle mit ersten und zweiten Werkzeugen.

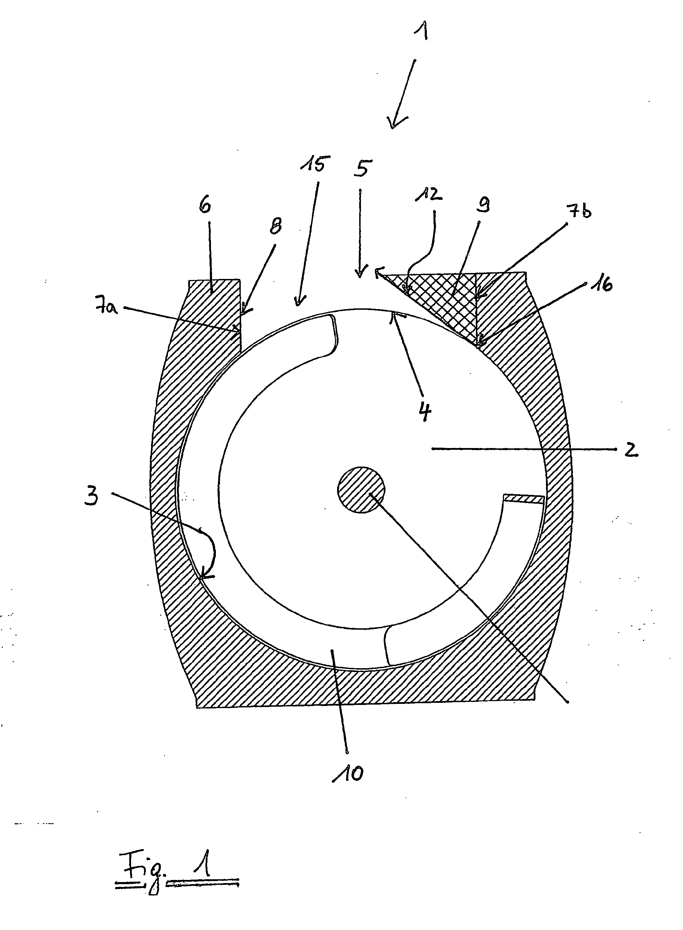

Figur 1 zeigt eine schematische Schnittdarstellung einer erfindungsgemässen Vorrichtung zum Mischen und Kneten 1. Der gezeigte Horizontalmischer 1 besitzt einen Kessel 2 mit einer Innenwand 3, die wenigstens teilweise einem Zylindermantel 4 entspricht.

Der Kessel besitzt eine halsartige Öffnung 5. Eine seitliche Wand 6 der Öffnung 5 ist als Schulterfläche 7a ausgebildet, die als Prallfläche 8 wirkt. Diese liegt ausserhalb des Zylindermantels 4. Die Prallfläche 8 ist im gezeigeten Ausführungsbeispiel in der Vertikalen angeordnet. Sie kann alternativ mit der Horizontale kleinere Winkel, zwischen 45 und 90 Grad, einschliessen.

Die der Prallfläche 8 gegenüberliegende Schulterfläche 7b der Öffnung 5 ist mit einem eingesetzten Keil 9 optimiert. Dieser verhindert ein Austreten von Wärme aus dem typischerweise temperierten Kessel 2 und das Überschwappen von Masse.

Der Keil 9 kann fester Bestandteil der Vorrichtung 1 sein oder entfernbar sein. In dem Fall kann er zum Beispiel zum Reinigen weggenommen werden oder je nach zu bearbeitender Masse braucht er gar nicht benutzt werden.

Im gezeigten Beispiel wird der Mischer 1 mit einem einachsigen Mischwerk betrieben, wobei die Welle 11 koaxial zur Zylinderfläche 4 angeordnet ist. Das Mischwerk besteht aus zwei oder mehreren Schneckenbändern 10, welche mit der Welle 11 an der Innenwand 3 entlang getrieben werden.

Die Schneckenbänder 10 treiben die nicht in der Figur dargstellt Masse im Mischer 1 umher und scheren sie zu der Wand.

Bei genügend hoher Umdrehungszahl ist die Zentrifugalkraft der Masse grösser als die Schwerkraft. In diesem Fall ist F_{ROUDE-Zahl} = Dₖ n² π/g grösser als 1 (wobei Dₖ der Innendurchmesser des Kessels, n die Drehzahl des Mischwerks und g die Erdbeschleunigung ist).

Der Keil 9 ist so ausgeführt, dass innerhalb der halsartigen Öffnung 5 Raum 15 für eine freie Flugbahn von durch das Werkzeug beschleunigter Masse geboten ist.

Wenn die Masse eine Ablösekante 16 an der Öffnung 5 erreicht, beginnt sie, einer Flugbahn eines schrägen Wurfs zu folgen, wobei sie eine Anfangsgeschwindigkeit in Tangentialrichtung 12 besitzt. Ist diese Tangentialgeschwindigkeit genügend gross, was von der Umdrehungsgeschwindigkeit der Welle und den Eigenschaften der Masse abhängt, so wird die Masse gegen die Prallfläche 8 geschleudert.

Die Geschwindigkeiten sind so produktabhängig so einzustellen, dass der theoretische Aufschlagpunkt auf halber Höhe der Schulterfläche 7 liegt.

Von dort fällt die Masse aufgrund der Schwerkraft hinab in den Kessel 2 und wird von den Schneckenbändern 10 wieder aufgenommen und mitgezogen.

Beim Auftreffen auf die Prallfläche 8 wird die Masse gestaucht und anschliessend beim Herunterfallen und Wiederaufnehmen gefaltet. Auf dieser Art wird die Masse einem Knetvorgang unterzogen.

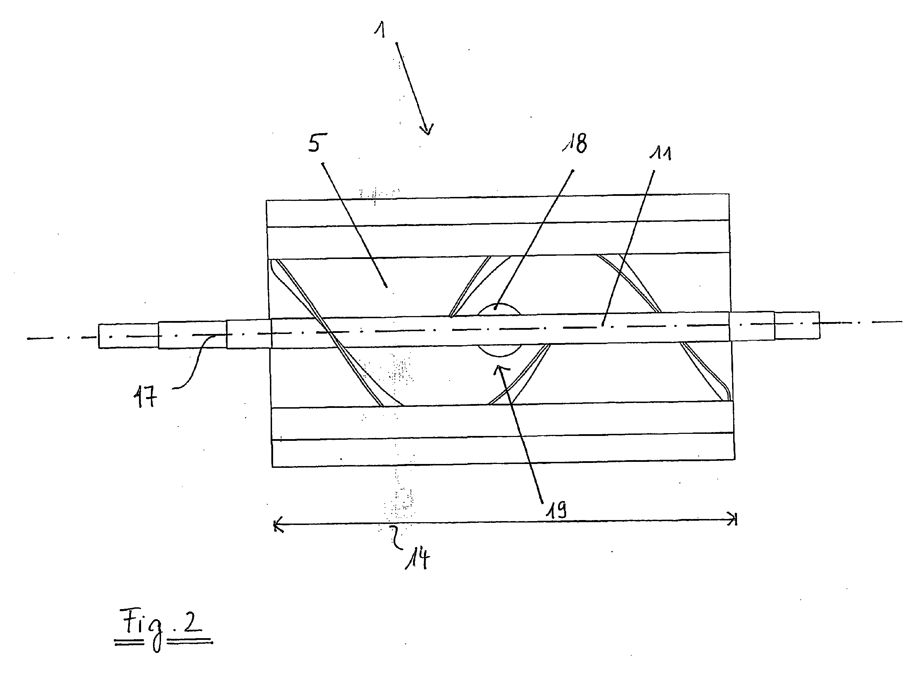

Figur 2 zeigt eine Draufsicht auf einen erfindungsgemässen Horizontalmischers 1.

An der Welle 11 sind zwei rechts- und linksgängige Schneckenbänder 10 angebracht, die in der Kesselmitte 19, also im Bereich des Auslaufs 18, überlappen. Die Bänder 10 treiben die Masse in die Kesselmitte 19, was zu einer sauberen Entleerung führt.

Die Steigung der Schneckenbänder 10 beträgt vorzugsweise in etwa das 0.6 fache der Kessellänge.

Die Bänder haben einen rechteckigen Querschnitt. Die halsartige Öffnung 5 erstreckt sich parallel zur Achse 17 des Rotationskörpers praktisch über die gesamte Länge 14 des Mischers 1.

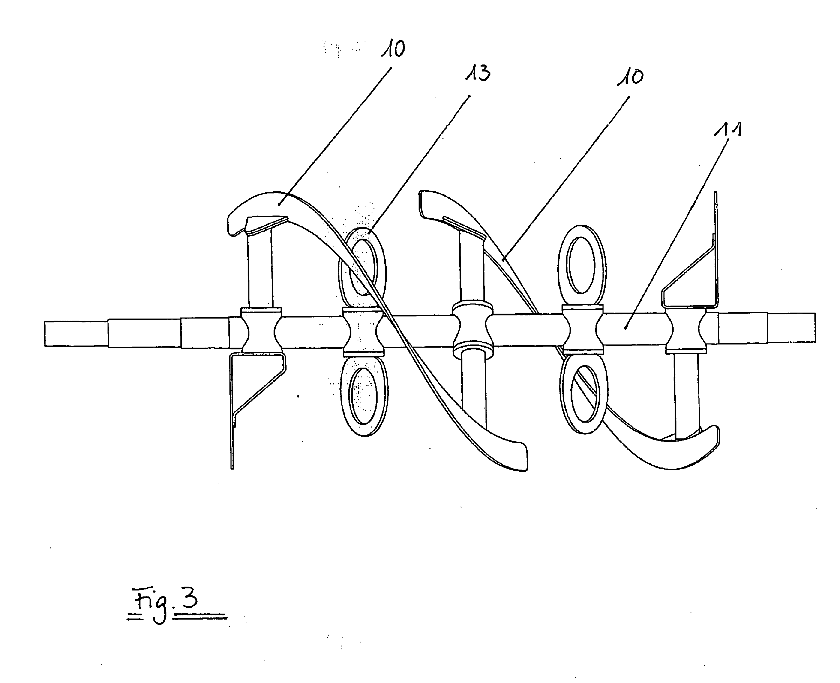

Figur 3 zeigt eine Draufsicht auf eine Welle 11 mit ersten und zweiten Werkzeugen 10, 13. Zusätzlich zu den Schneckenbändern 10 können an der Welle 11 schräg gestellte Rührpaddel 13 angebracht sein.

## Patentansprüche

1. Vorrichtung zum Mischen und Kneten von Massen, insbesondere von Schokoladenmassen,
- mit einem bevorzugt horizontal anzuordnenden Kessel (2) mit einer Innenwand (3),
- wobei die Innenwand (3) des Kessels wenigstens teilweise, bevorzugt zu 60-90 % ihrer Fläche, der Aussenfläche eines Rotationskörpers nachbildet, insbesondere eines Zylindermantels (4),
- und mit einer Welle (11) und mindestens einem daran befestigten Werkzeug (10, 13) insbesondere einem Scherwerkzeug,
**dadurch gekennzeichnet, dass**
in dem Kessel (2) mindestens eine, insbesondere ebene, Prallfläche (8) angeordnet ist, die sich in axialer Richtung des Rotationskörpers erstreckt und die sich insbesondere ausserhalb und/oder innerhalb der Aussenfläche des Rotationskörpers befindet
und die Vorrichtung eine Temperiereinrichtung zum Wärmen und/oder Kühlen des Kessels und/oder der Innenwand und/oder der Masse aufweist.

2. Vorrichtung nach Anspruch 1, **dadurch gekennzeichnet, dass** die Welle (11) koaxial mit der Achse des Rotationskörpers angeordnet ist.

3. Vorrichtung nach Anspruch 1 oder 2,
**dadurch gekennzeichnet, dass**
der Kessel (2) Raum (15) bietet für einen freie Flugbahn, insbesondere Parabelbahn, von durch das Werkzeug (10, 13) beschleunigter Masse, insbesondere von tangential von der Innenwand (3) aus beschleunigter Masse.

4. Vorrichtung nach einem der vorhergehenden Ansprüche, **dadurch gekennzeichnet, dass** der Kessel (2) eine parallel zur Achse (17) des Rotationskörpers angeordnete halsartige Öffnung (5) mit mindestens einer Schulterfläche (7a, 7b) aufweist.

5. Vorrichtung zum Mischen und Kneten von Massen, insbesondere von Schokoladenmassen, nach einem der vorhergehenden Ansprüche, bestehend aus einem
bevorzugt horizontal anzuordnenden Kessel (2) mit einer wenigstens teilweise zylindrischen Innenwand (3), mit einer Welle (11) und mindestens einem daran befestigten werkzeug (10, 13), insbesondere einem Scherwerkzeug, **dadurch gekennzeichnet, dass**
der Kessel (2) eine parallel zur Achse (17) des Zylinders angeordnete halsartige Öffnung (5) mit mindestens einer Schulterfläche (7a, 7b) aufweist, wobei sich die Öffnung (5) im Wesentlichen über die gesamte Länge (14) des Kessels (2) erstreckt.

6. Vorrichtung nach Anspruch 4 oder 5, dass
mindestens eine Schulterfläche (7a, 7b) der Öffnung eine Prallfläche (8) bildet.

7. Vorrichtung nach einem der vorhergehenden Ansprüche, **dadurch gekennzeichnet, dass**
das Werkzeug ein Schneckenband (10) ist.

8. Vorrichtung nach einem der vorhergehenden Ansprüche, **dadurch gekennzeichnet, dass**
die Vorrichtung eine Geschwindigkeitssteuerung und/oder einen Geschwindigkeitsregler für die Drehgeschwindigkeit der Welle aufweist, insbesondere zur Anspassung der Flug- oder
Parabelbahn an die Eigenschaften der Masse.

9. Vorrichtung zum Mischen und Kneten von Fettmassen, insbesondere von Schokoladenmassen, nach einem der vorhergehenden Ansprüche, bestehend aus einem bevorzugt horizontal anzuordnenden Kessel (2) mit einer wenigstens teilweise zylindrischen Innenwand (3), mit einer Welle (11) und mindestens einem daran befestigten Werkzeug (10, 13), insbesondere einem Scherwerkzeug, **dadurch gekennzeichnet, dass** an der Welle zwei gegenläufige Schneckenbänder (10) oder Teile von gegenläufigen Schneckenbändern (10) angebracht sind, die bevorzugt, zumindest teilweise, überlappen, bevorzugt in der Nähe des Auslasses des Kessels.

10. Vorrichtung nach einem der vorhergehenden Ansprüche, **dadurch gekennzeichnet, dass** auf der Welle mindestens ein Rührpaddel (13) angeordnet ist.

11. Verfahren zum Mischen und Kneten von Massen, insbesondere Schokoladenmassen, **dadurch gekennzeichnet, dass** die Masse in einer Vorrichtung zum Mischen und Kneten, insbesondere gemäss Anspruch 1-10, von mindestens einem Werkzeug (10, 13), insbesondere einem Scherwerkzeug, gegen eine Prallfläche (8) geschleudert wird und dass die Masse während der Bearbeitung temperiert wird.

12. Verfahren nach Anspruch 11, **dadurch gekennzeichnet, dass** die Masse in einer Vorrichtung zum Mischen und Kneten mit einem wenigstens eine teilweise zylindrische Innenwand (3) aufweisenden Kessel (2), insbesondere einem Horizontalmischer (1), tangential zu der zylindrischen Innenwand (3) beschleunigt
wird und die Flugbahn eines schrägen Wurfs durchläuft, bevor sie auf die Prallfläche (8) auftrifft.

13. Verfahren nach Anspruch 11 oder 12, **dadurch gekennzeichnet, dass** die Geschwindigkeit des mindestens einen Werkzeuges (10, 13) gesteuert oder geregelt wird, insbesondere zur Anpassung der Flug- oder Parabelbahn an die Eigenschaften der Masse.

14. Verfahren nach einem der Ansprüche 11 bis 13, **dadurch gekennzeichnet, dass** die Masse in einem Horizontalmischer (1) zunächst bei einer ersten Geschwindigkeit bewegt wird, wobei die Komponenten der Masse vorwiegend gemischt werden, und die Masse anschliessend bei einer zweiten Geschwindigkeit bewegt wird, wobei die Masse gegen die Prallfläche (8) geschleudert und vorwiegend geknetet wird.

## Claims

1. A device for mixing and kneading masses, in particular chocolate masses,
- with a kettle (2) which is preferably to be arranged horizontally and has an inner wall (3),
- wherein at least part of the inner wall (3) of the kettle, preferably up to 60-90% of the surface thereof, imitates the outer surface of a rotational body, in particular a cylinder jacket (4),
- and with one shaft (11), and at least one tool (10, 13)
fastened thereto, in particular a shearing tool, **characterized in that** at least one, in particular planar, deflector surface (8) is arranged in the kettle (2), said deflector surface extending in the axial direction of the rotational body and being located in particular outside and/or within the outer surface of the rotational body and
the device has a temperature control means for heating and/or cooling the kettle and/or the inner wall and/or the mass.

2. The device as claimed in claim 1, **characterized in that** the shaft (11) is arranged coaxially with the axis of the rotational body.

3. The device as claimed in claim 1 or 2, **characterized in that** the kettle (2) provides space (15) for a free trajectory, in particular parabolic trajectory, of mass accelerated by the tool (10, 13), in particular of mass accelerated tangentially from the inner wall (3).

4. The device as claimed in one of the preceding claims, **characterized in that** the kettle (2) has a neck-like opening (5) which is arranged parallel to the axis (17) of the rotational body, said neck-like opening having at least one shoulder surface (7a, 7b).

5. A device for mixing and kneading masses, in particular chocolate masses, as claimed in one of the preceding claims, consisting of a kettle (2) which is preferably to be arranged horizontally and has an at least partially cylindrical inner wall (3), with one shaft (11), and at least one tool (10, 13) which is fastened thereto, in particular a shearing tool, **characterized in that** the kettle (2) has a neck-like opening (5) which is arranged parallel to the axis (17) of the cylinder, said neck-like opening having at least one shoulder surface (7a, 7b), wherein the opening (5) extends substantially over the entire length (14) of the kettle (2).

6. The device as claimed in claim 4 or 5, **characterized in that** at least one shoulder surface (7a, 7b) of the opening forms a deflector surface (8).

7. The device as claimed in one of the preceding claims, **characterized in that** the tool is a ribbon (10).

8. The device as claimed in one of the preceding claims, **characterized in that** the device has a speed controller and/or a speed regulator for the rotational speed of the shaft, in particular for adapting the trajectory or parabolic trajectory to the properties of the mass.

9. A device for mixing and kneading fatty masses, in particular chocolate masses, as claimed in one of the preceding claims, consisting of a kettle (2) which is preferably to be arranged horizontally and has an at least partially cylindrical inner wall (3), with one shaft (11), and at least one tool (10, 13) which is fastened thereto, in particular a shearing tool, **characterized in that** two counter-rotating ribbons (10) or parts of counter-rotating ribbons (10) are attached to the shaft and preferably, at least partially, overlap, preferably in the vicinity of the outlet of the kettle.

10. The device as claimed in one of the preceding claims, **characterized in that** at least one stirring paddle (13) is arranged on the shaft.

11. A method for mixing and kneading masses, in particular chocolate masses, **characterized in that**, in a mixing and kneading device, in particular as per claims 1 - 10, the mass is hurled against a deflector surface (8) by at least one tool (10, 13), in particular a shearing tool and that the temperature of the mass is controlled during the processing.

12. The method as claimed in claim 11, **characterized in that**, in a mixing and kneading device with a kettle (2) having at least one partially cylindrical inner wall (3), in particular a horizontal mixer (1), the mass is accelerated tangentially with respect to the cylindrical inner wall (3), and passes through an oblique trajectory before impacting against the deflector surface (8).

13. The method as claimed in claim 11 or 12, **characterized in that** the speed of the at least one tool (10, 13) is controlled or regulated, in particular for adapting the trajectory or parabolic trajectory to the properties of the mass.

14. The method as claimed in one of claims 11 to 13, **characterized in that** the mass is first of all moved at a first speed in a horizontal mixer (1), wherein the components of the mass are predominantly mixed, and the mass is subsequently moved at a second speed, wherein the mass is hurled against the deflector surface (8) and the mass is predominantly kneaded.

## Revendications

1. Dispositif pour le malaxage et le pétrissage de pâtes, particulièrement de pâtes de chocolat,
- comprenant un pot (2) devant être disposé de préférence horizontalement et pourvu d'une paroi intérieure (3),
- la paroi intérieure (3) du pot imitant au moins partiellement, de préférence sur jusqu'à 60-90 % de sa surface, la surface extérieure d'un corps de révolution, en particulier d'une enveloppe cylindrique (4),
- et comprenant un arbre (11) et au moins un outil (10, 13) fixé à celui-ci, en particulier un outil de cisaillement,
**caractérisé**
**en ce qu'**au moins une surface d'impact (8) en particulier plane est disposée dans le pot (2), laquelle s'étend dans la direction axiale du corps de révolution et se trouve en particulier à l'extérieur et/ou à l'intérieur de la surface extérieure du corps de révolution,
et **en ce que** le dispositif comprend un dispositif de régulation de la température pour chauffer et/ou refroidir le pot et/ou la paroi intérieure et/ou la pâte.

2. Dispositif selon la revendication 1, **caractérisé en ce que** l'arbre (11) est disposé de manière coaxiale à l'axe du corps de révolution.

3. Dispositif selon la revendication 1 ou 2, **caractérisé en ce que**
le pot (2) offre un espace (15) pour une trajectoire libre, en particulier une trajectoire parabolique, de la pâte accélérée par l'outil (10, 13), en particulier de la pâte accélérée tangentiellement à partir de la paroi intérieure (3).

4. Dispositif selon l'une quelconque des revendications précédentes, **caractérisé en ce que** le pot (2) comprend une ouverture (5) de type col comprenant au moins une surface d'épaulement (7a, 7b) et disposée parallèlement à l'axe (17) du corps de révolution.

5. Dispositif pour le malaxage et le pétrissage de pâtes, particulièrement de pâtes de chocolat, selon l'une quelconque des revendications précédentes, constitué
d'un pot (2) devant être disposé de préférence horizontalement et pourvu d'une paroi intérieure (3) au moins partiellement cylindrique, d'un arbre (11) et d'au moins un outil (10, 13) fixé à celui-ci, en particulier d'un outil de cisaillement, **caractérisé en ce que**
le pot (2) comprend une ouverture (5) de type col comprenant au moins une surface d'épaulement (7a, 7b) et disposée parallèlement à l'axe (17) du cylindre, l'ouverture (5) s'étendant essentiellement sur toute la longueur (14) du pot (2).

6. Dispositif selon la revendication 4 ou 5, **caractérisé en ce**
**qu'**au moins une surface d'épaulement (7a, 7b) de l'ouverture forme une surface d'impact (8).

7. Dispositif selon l'une quelconque des revendications précédentes, **caractérisé en ce que** l'outil est un ruban en spirale (10).

8. Dispositif selon l'une quelconque des revendications précédentes, **caractérisé en ce que** le dispositif comprend une commande de vitesse et/ou un régulateur de vitesse pour la vitesse de rotation de l'arbre, en particulier pour adapter la trajectoire ou la trajectoire parabolique aux propriétés de la pâte.

9. Dispositif pour le malaxage et le pétrissage de pâtes grasses, particulièrement de pâtes de chocolat, selon l'une quelconque des revendications précédentes, constitué d'un pot (2) devant être disposé de préférence horizontalement et pourvu d'une paroi intérieure (3) au moins partiellement cylindrique, d'un arbre (11) et d'au moins un outil (10, 13) fixé à celui-ci, en particulier d'un outil de cisaillement, **caractérisé en ce que** deux rubans en spirale (10) de sens opposés ou parties de rubans en spirale (10) de sens opposés sont monté(e)s sur l'arbre, lesquel(le)s se chevauchent de préférence au moins partiellement, de préférence à proximité de la sortie du pot.

10. Dispositif selon l'une quelconque des revendications précédentes, **caractérisé en ce qu'**au moins une palette de mélange (13) est disposée sur l'arbre.

11. Procédé pour le malaxage et le pétrissage de pâtes, particulièrement de pâtes de chocolat, **caractérisé en ce que**
la pâte est lancée contre une surface d'impact (8) par au moins un outil (10, 13), en particulier un outil de cisaillement, dans un dispositif pour le malaxage et le pétrissage, en particulier selon les revendications 1 à 10, et **en ce que** la température de la pâte est régulée pendant le traitement.

12. Procédé selon la revendication 11, **caractérisé en ce que** la pâte est accélérée tangentiellement à la paroi intérieure cylindrique (3) dans un dispositif pour le malaxage et le pétrissage comprenant un pot (2) comprenant au moins une paroi intérieure (3) partiellement cylindrique, en particulier un malaxeur horizontal (1), et décrit la trajectoire d'un jet oblique avant de heurter la surface d'impact (8).

13. Procédé selon la revendication 11 ou 12, **caractérisé en ce que** la vitesse de l'au moins un outil (10, 13) est commandée ou régulée, en particulier pour adapter la trajectoire ou la trajectoire parabolique aux propriétés de la pâte.

14. Procédé selon l'une quelconque des revendications 11 à 13, **caractérisé en ce que** la pâte est tout d'abord déplacée à une première vitesse dans un malaxeur horizontal (1), les composants de la pâte étant principalement malaxés, et la pâte est ensuite déplacée à une deuxième vitesse, la pâte étant lancée contre la surface d'impact (8) et étant principalement pétrie.
